Europäisches Patentamt

European Patent Office

Office européen des brevets

(11) Publication number: **0 469 549 A2**

# EUROPEAN PATENT APPLICATION

(21) Application number: **91112797.5**

(22) Date of filing: **30.07.91**

(51) Int. Cl.5: **G06F 13/26**

(30) Priority: **30.07.90 JP 199142/90**

(43) Date of publication of application:
**05.02.92 Bulletin 92/06**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Teruyama, Tatsuo**
**2-14-10, Shinkoyasu, Kanagawa-ku**
**Yokohama-shi, Kanagawa-ken(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Interrupt control unit.**

(57) In an interrupt control unit (1), an interrupt mask circuit (2) has at least one interrupt mask bit. This interrupt mask bit decides whether the unit is set to an interrupt enabled state or interrupt disabled state. In this invention, said mask bit is connected to a received channel inform line (32) from which said mask bit is informed of the acceptance of interruptions by an outside processor (40). Having been informed of said acceptance through said received channel inform line (32), said mask bit is set to an interrupt disabled state so as to prohibit the execution of successive interruptions. As a result, the interrupt overflow, especially in the level 0, can be effectively prevented.

F I G.4

## BACKGROUND OF THE INVENTION

### Field of the invention

This invention relates to an interrupt control unit which is able to mask an interrupt request.

### Description of the Prior Arts

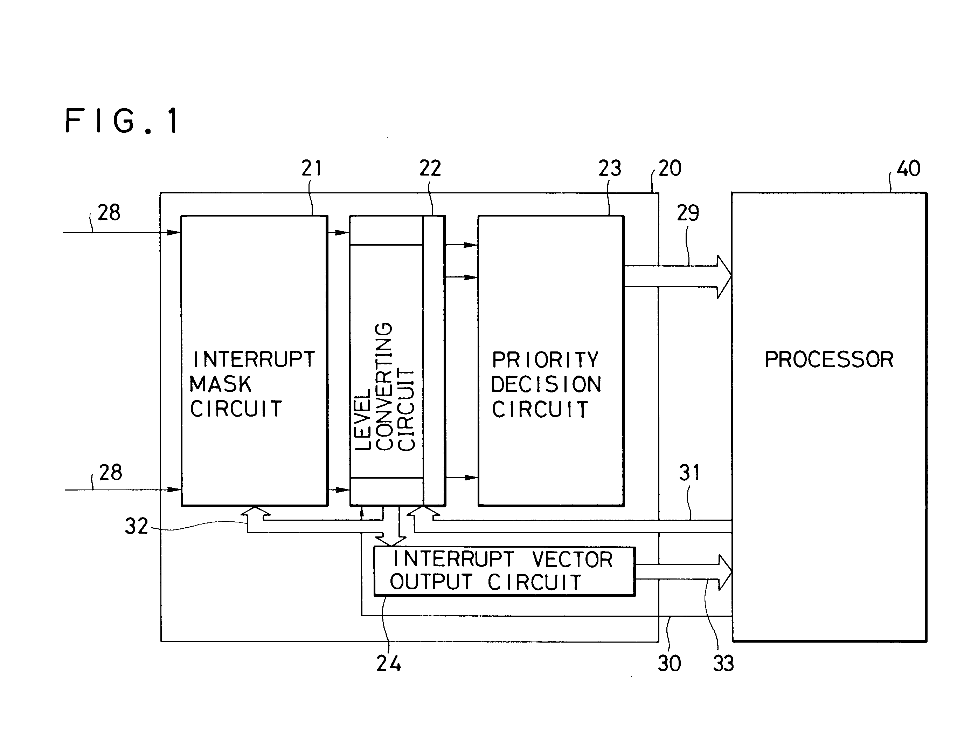

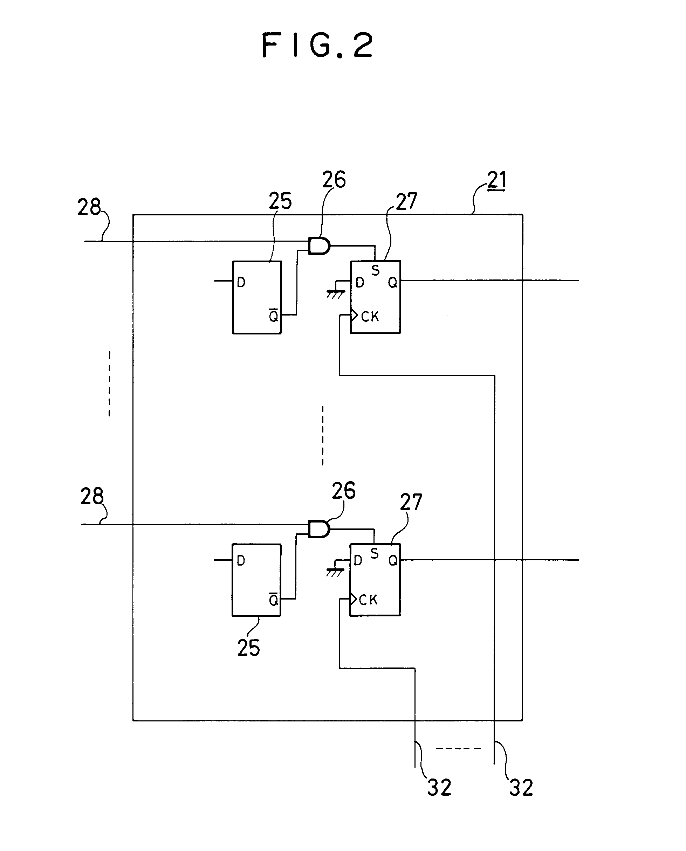

Fig. 1 is a block diagram showing a structure of the prior art interrupt control unit 20 and its connectivity with a processor 40. Fig. 2 shows the detailed structure of an interrupt mask circuit 21, which is contained in interrupt control unit 20 shown in Fig. 1.

As shown in Fig. 1, interrupt control unit 20 is comprised of the interrupt mask circuit 21, a level converting circuit 22, a priority decision circuit 23, and an interrupt vector output circuit 24. As shown in Fig. 2, interrupt mask circuit 21 is also comprised of a plurality of interrupt mask bits 25, AND circuits 26, and interrupt detecting latches 27. These interrupt mask bits 25, AND circuits 26, and interrupt detecting latches 27 are connected respectively to each of signal lines 28, from which a plurality of interrupt request signals are input from external hardware.

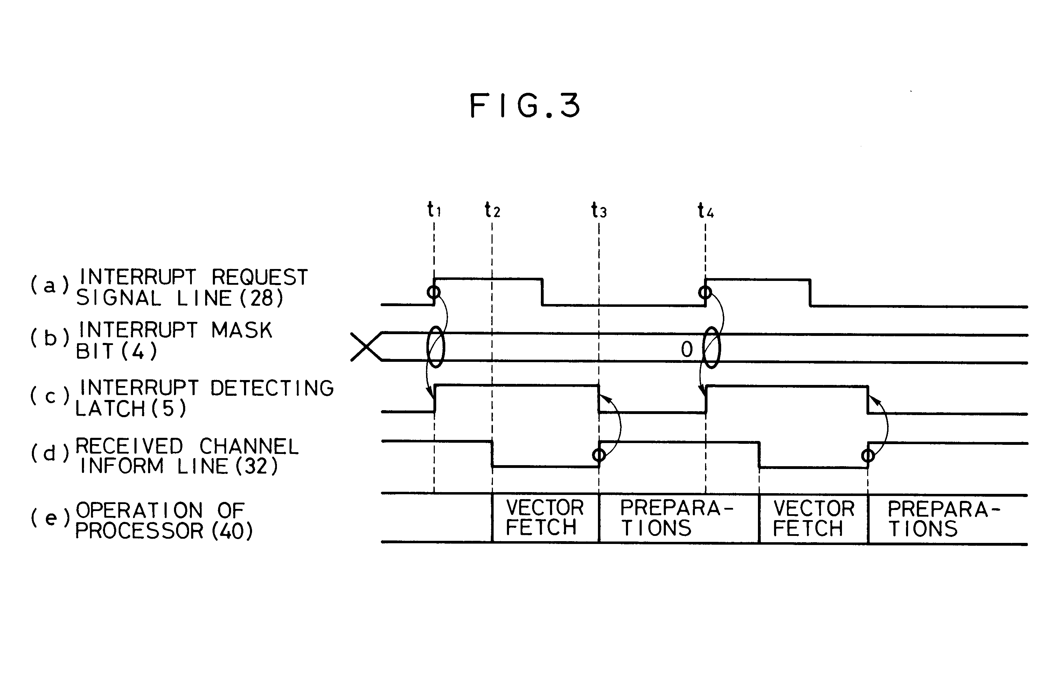

The operation of the unit mentioned above and its problems will be explained next by referring to the timing chart shown in Fig. 3.

As shown in Fig. 3a, when a certain channel of interrupt request signal lines 28 becomes high level (t1), an interrupt request can be input through the channel. This request signal will be introduced into AND circuit 26 in interrupt mask circuit 21. In this instance, if interrupt mask bit 25 has been cleared (0) in advance as shown in Fig. 3b, ( i.e., the $\overline{Q}$ output is in high level ), it is considered to be in an interrupt enabled state. Then, the interrupt detecting latch 27 is set and its output becomes high level to inform level converting circuit 22 of the generation of interruption. On the other hand, if interrupt mask bit 25 is set at (1) in advance, it is considered to be in an interrupt disabled state. Then, the output of AND circuit 26 stays in low level, even if an interrupt request is input through interrupt request signal lines 28. Latch 27 cannot, therefore, be set and so level converting circuit 22 cannot be informed of the generation of interruption.

Level converting circuit 22 has registers corresponding to each interrupt channel in order to hold its interrupt level. These resisters are writable from outside. When level converting circuit 22 is informed of the interrupt generation from interrupt mask circuit 21 as mentioned above, a certain interrupt level corresponding to the interruption in a particular channel is output from circuit 22 to priority decision circuit 23. This priority decision circuit 23 encodes the interrupt level having the highest priority which comes from level converting circuit 22, and informs processor 40 of the interrupt generation by outputting the encoded value through interrupt level output line 29.

After processor 40 receives the interrupt generation as mentioned above, interrupt enabled line 30 becomes low level and then the received interrupt level is output to received level inform line 31 by the processor. Level converting circuit 22 recognizes the acceptance of the interruption by receiving signals through interrupt acknowledge signal 30 and level inform lines 31. In other words, when interrupt enabled signal line 30 becomes low level, level converting circuit 22 reads out the interrupt level, which is output onto received level inform line 31 by processor 40. And then, level converting circuit 22 causes the level of a particular accepted level line 32, which corresponds to a certain channel informed of the generation of the interruption from interrupt mask circuit 21, to change into the low level ( t2 ), as shown in Fig. 3d. Each interrupt channel is provided with a received channel inform line 32. Interrupt vector output circuit 24 and interrupt mask circuit 21 are informed of the interruption channel, on which the processor is receiving, through received channel inform lines 32.

Interrupt vector output circuit 24 keeps saving interrupt vectors for each interrupt channel, and outputs interrupt vectors, which correspond to the channel number, into interrupt vector output line 33 during which the received channel inform line 32 is in the low level. After reading out of this interrupt vector, processor 40 causes interrupt enabled line 30 to become high level and completes the readout cycle of the interrupt vectors. When interrupt enabled line 30 has become high level, level converting circuit 22 changes received channel inform line 32 to high level ( t3 ). This high level signal is then input to the ck terminal of interrupt detecting latch 27 contained in interrupt mask circuit 21 in order to clear latch 27 to a low output level. As a result, interrupt control unit 20 comes into an interrupt acceptable state for successive interruptions.

After reading out interrupt vectors, processor 40 looks up tables which correspond to the interrupt vectors and which are stored in memories. In these tables, the first address of the interrupt handling routines corresponding to each interrupt vector have been stored in advance. Then, processor 40 saves and stores the present values of internal registors in its memories and branches to the first address of the interrupt handling routine. The time period from the reading out of an interrupt vector from outside to the execution of the first instruction of an interrupt handling routine is about 20~ 100 clocks in usual. The execution of instructions, however, cannot be carried out during this period. After the execution of instructions in the interrupt handling routine, processor 40 fetches out the values of the internal registers, which had been stored in the memories before the execution of the interruption handling, and returns to the original operation.

The prior art interrupt control unit is operated as mentioned above. Processor 40, however, cannot execute user instructions from the instant that processor 40 has read out an interrupt vector from interrupt control unit 20, to the instant that processor 40 has branched to the first instruction of an interrupt handling routine. The interrupt mask bit 25 can be set or reset only by a write instruction to this interrupt control unit. As a result, there arises a problem that interrupt mask bit 25 cannot set by any instructions from user programs during that period. In other words, interrupt mask bit 25 keeps a reset state during that time, and the $\overline{Q}$ output of bit 25 holds high level as shown in Fig. 3b. If a second interrupt request is input on the same interrupt request line 28 ( time t4 in Fig. 3a ), the interruption cannot be masked within the interrupt control unit 20 and this results in processor 40 accepting a second interruption.

Generally speaking, except for the interruption in level 0 ( non-maskable ), processor 40 does not accept any successive interruption after the second time, so should not cause problems practically. In the interruption of level 0, however, no mask has been set within the processor because this level 0 interruption is the highest priority level of interruptions. Thus, any interruption after the second time cannot be masked in level 0.

After the reception of an external interruption, processor 40 executes interruption preparations ( such as to save in its memories the values of internal registers ), and then, executes practical interruption handling programs. If some interruptions are input to interrupt request line 28 of level 0 successively, however, the successive interruptions cannot be masked due to the reason mentioned above. Then, only vector fetches and interruption preparations are executed repeatedly, and interruption handling programs virtually cannot be executed. This situation is called ' over-flow generation in interruption '.

## SUMMARY OF THE INVENTION

This invention has been made to overcome the above mentioned problem, which as mentioned above is labled 'over-flow generation in interruption'.

The objective of this invention is to provide an interrupt control unit which is able to prohibit the interrupt request on a particular channel to the processorimmediately after the completion of that interrupt vector readout cycle of the channel.

Another objective of this invention is to provide an interrupt control unit which is able to set in advance to the interrupt disabled state or the interrupt enabled state for successive interruptions after the completion of interrupt vector output of the first interruption, in order to improve its degree of freedom in operation.

The first aspect of this invention provides an interruption control unit comprising: at least one interrupt request signal line to input interrupt requests from outside; an interrupt mask circuit having at least one interrupt mask bit in order to decide whether the interruption is enabled or disabled; an interrupt level output line to output into outside the interrupt level of said interrupt request, which are input through said interrupt request signal line, only when said interrupt mask bit is in an interrupt enabled state; an interrupt vector output circuit to output corresponding interrupt vectors to the outside when said interrupt requested to outside through said interrupt level output line has been accepted by the processor; a received channel inform line to recognize the completion of interrupt vector output from said output circuit; and wherein said interrupt mask bit is connected to said received channel inform line and said interrupt mask bit is set to an interrupt disabled state and to prohibit successive interruptions by being informed of the completion of interrupt vector output from said inform line.

According to the first aspect of the present invention, first, an interrupt request from outside, which is input through said interrupt request signal line, is output, for example, to an external processor through said interrupt level output line, if said interrupt mask bit is in an interrupt enabled state. After the processor is informed of the generation of an interruption, said interrupt vector output circuit outputs corresponding interrupt vectors to the processor. The end of this output is recognized by the received channel inform line, from which recognizing signals are transmitted to said interrupt mask bit. After receiving the transmitted signals which indicate the end of the interrupt vector output, the interrupt mask bit is set to an interrupt disabled state in order to prohibit successive interruptions. As a result, when some interrupt requests are input successively through the same interrupt request line, these successive interruptions will be masked within the control unit immediately at the completion of the first interrupt vector output. Therefore, the over-flow of interruptions especially in level 0 ( non-maskable ) will be prevented in this unit.

The second aspect of this invention is characterized by the fact that in addition to said interrupt control unit an automatic mask setting bit is also connected to said interrupt mask bit, in order to designate whether the successive interruptions are permitted or not immediately after the completion of the first interrupt vector output.

According to the second aspect of the present invention, said interrupt mask bit can be controlled by the automatic mask setting bit so as to predetermine whether the successive interruptions should be permitted or not immediately after the completion of the first interrupt vector output. As a result, the degree of freedom of this unit is greatly improved.

These and other objects, features, and advantages of the present invention will be more apparent from the following detailed description of preferred embodiments in conjunction with the accompanying drawings.

BRIEF DESCRIPTION OF THE DRAWINGS

Fig. 1 is a block diagram showing the structure of a prior art interrupt control unit and its connectivity to an outside processor;
Fig. 2 is a circuit diagram showing an important portion of the unit shown in Fig. 1;
Fig. 3 is a timing chart to explain the operation of the unit shown in Fig. 1;
Fig. 4 is a block diagram showing the first embodiment of an interrupt control unit according to the present invention and its connectivity to an outside processor;
Fig. 5 is a circuit diagram showing an important portion of the unit shown in Fig. 4;
Fig. 6 is a timing chart to explain the operation of the unit shown in Fig. 4; and
Fig. 7 is a circuit diagram explaining the second embodiment of the present invention.

DETAILED DESCRIPTION OF THE PREFERRED EMBODIMENTS

Preferred embodiments of the present invention will be explained below in conjunction with drawings. In the drawings described below, the same numbers as those shown in Figs. 1 and 2 show the same or the like structure members. Therefore, the explanations of these members will be omitted.

Embodiment 1

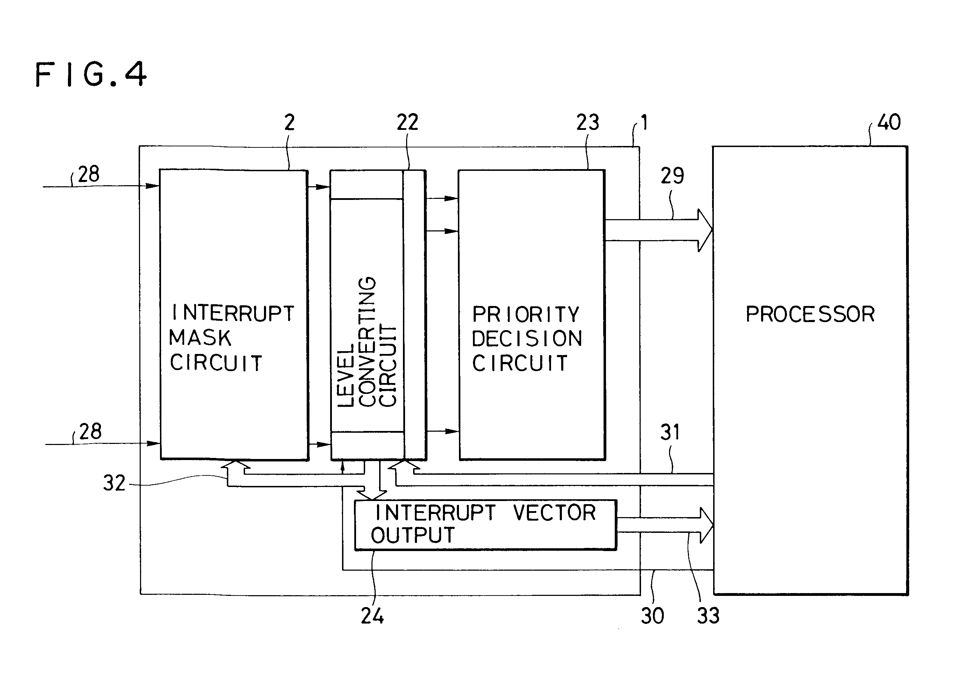

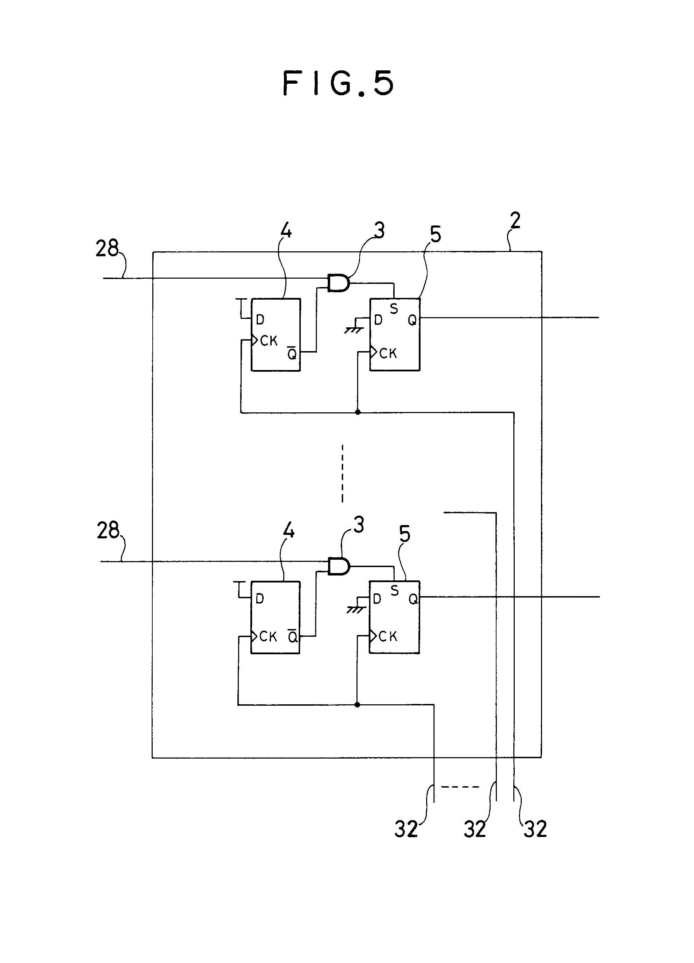

Fig. 4 is a block diagram showing the structure of an interrupt control unit 1 and its connectivity to processor 40. Unlike the prior art interrupt control unit 20 shown in Fig. 1, this interrupt control unit 1 still has a novel interrupt mask circuit 2, of which the detail is shown in Fig. 5. In other words, although interrupt mask circuit 2 is comprised of an AND circuit 3, an interrupt mask bit 4 and an interrupt detecting latch 5 for each level of interrupt request signal lines 28 as shown in Fig. 5, the ck terminal of interrupt mask bit 4 is connected to received channel inform line 32, unlike the prior art unit shown in Fig. 2. The structure of level converting circuit 22, priority decision circuit 23, interrupt vector output circuit 24, as well as the connectivity among these circuits, and the connectivity between these circuits and processor 40 are almost the same as those of the prior art unit shown in Fig. 1, so that their explanation will be omitted.

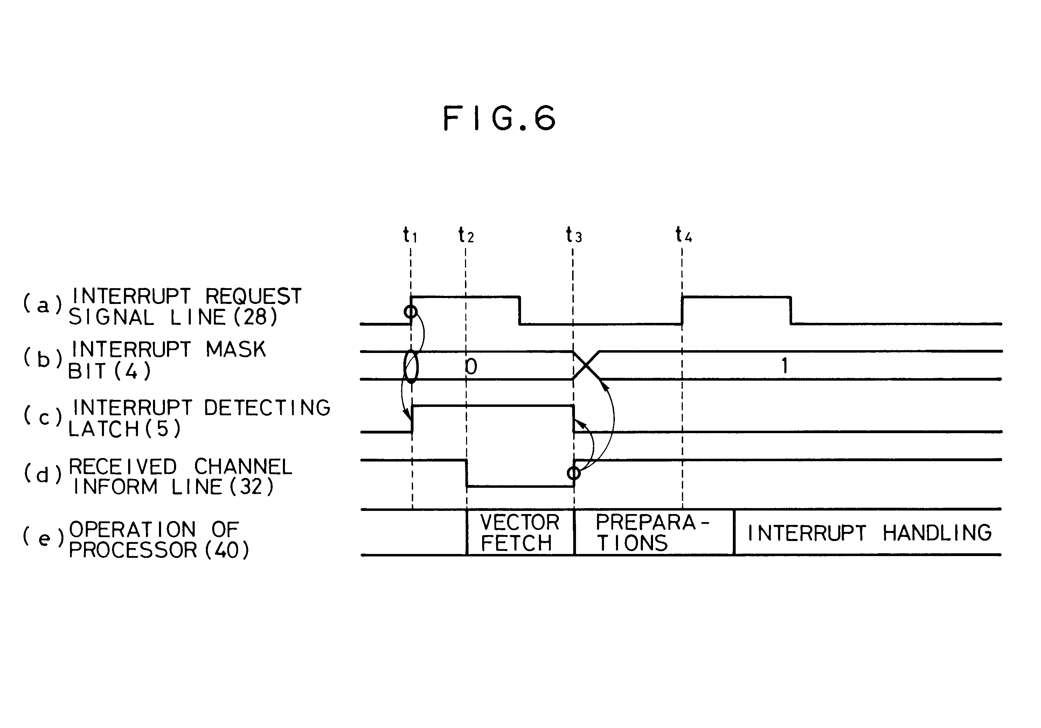

The operation of the above described unit will be explained below by referring to the timing chart shown in Fig. 6.

In this case, first, interrupt mask bit 4 has been set in a clear state in advance. In this instance, the output of AND circuit 3 becomes high level to set interrupt detecting latch 5, if an interrupt request signal line 28 has become high level and an interrupt request has been introduced from outside ( time t1, in Fig. 6 ). This is because mask bit 4 has been cleared in advance. Then, the output of latch 5 becomes high level to inform the generation of an interruption to level converting circuit 22. Level converting circuit 22, then, outputs a predetermined interrupt level to priority decision circuit 23. After that, circuit 23 outputs an interrupt level to processor 40 according to said interrupt request level. Said interrupt request having been accepted by processor 40, an interrupt enabled signal line 30 is set to low level and level converting circuit 22 will read out said interrupt level, which is accepted by processor 40, through received level inform line 31. Level converting circuit 22 then make the received channel informline 32 of the particular channel low level. ( time t2 shown in Fig. 6d ). This particular channel has the same level as that of said interrupt level, and corresponds to the interrupt channel which has been informed of the generation of an interruption through interrupt mask circuit 2.

After received channel inform line 32 has become low level as mentioned above, interrupt vector output circuit 24 outputs interrupt vectors of the corresponding channel into interrupt vector output line 33. Processor 40 reads out the interrupt vectors through output line 33 and causes interrupt enabled line 30 to change to high level to complete the interrupt vector read out cycle. When interrupt enabled signal line 30 becomes high level, level converting circuit 22 causes received channel inform line 32 to change to high level ( t3 ). When received channel inform line 32 has become low level as mentioned above, interrupt vector output circuit 24 negates interrupt vector output line 33.

In interrupt mask circuit 2, on the other hand, interrupt detecting latch 5 is cleared to erase the interrupt request, when received channel inform line 32 has changed from low level to high level. At the same time, the ck terminal of interrupt mask bit 4 is set to high level, so this bit is set to 1 and the $\overline{Q}$ terminal is set at low level. Thus, interrupt mask bit 4 comes into an interrupt disabled state to mask an interruption in that channel, even if interrupt request signal line 28 becomes high level again ( t4 ). As a result, processor 40 executes an interrupt handling program after the vector fetch and preparations, as shown in Fig. 6e.

Embodiment 2

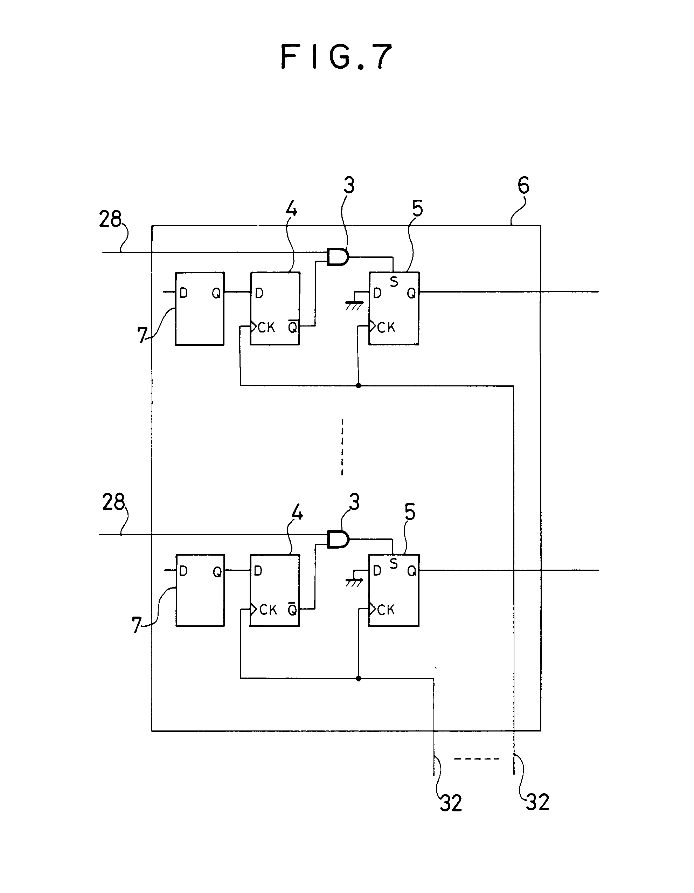

Now, the second embodiment of the present invention will be explained by referring to Fig. 7. This figure shows the detail of interrupt mask circuit 6, which should be included in the interrupt control unit according to the second embodiment. This circuit 6 is characterized by the fact that in addition to interrupt mask circuit 2 of the first embodiment shown in Figs. 4 and 5, an automatic mask setting bit 7 is further provided in circuit 2.

In other words, automatic mask setting bit 7 in interrupt mask circuit 6 is a flip-flop which is writable from outside, and its output is connected to the D input of interrupt mask bit 4. When the flip-flop 7 is in a set-state, interrupt mask bit 4 will be set as soon as the interrupt vector reading cycle has finished, to form an interrupt disabled state. On the other hand, if the flip-flop has been cleared, interrupt mask bit 4 stays in a clear state to form an interrupt enabled state for successive interruptions. Thus, automatic mask setting bit 7, which is newly provided, can designate automatically whether the successive interruptions in the channel will be allowed or not, after the completion of the readout cycle of interrupt vectors.

In summary, as explained above by referring to the first and second embodiments, the interrupt control unit according to the present invention can prohibit successive interruptions of a particular channel after the output of interrupt vectors is completed. Thus, the interrupt overflow, especially in the level 0, can be effectively prevented.

Furthermore, it is possible to add an automatic mask setting bit with the interrupt mask bit so as to designate in advance whether to allow or not to allow successive interruptions to occur once the interrupt vector output is completed. So, the degree of freedom in the operation is greatly improved.

**Claims**

1. An interrupt control unit comprising;
   at least one interrupt request signal line to input interrupt requests from outside;
   an interrupt mask circuit having at least one interrupt mask bit in order to decide whether the interruption is enabled or disabled;
   an interrupt level output line to output into outside said interrupt requests, which are input through said interrupt request signal line, only when said interrupt mask bit is in an interrupt enabled state
   an interrupt vector output circuit to output corresponding interrupt vectors to outside when said interruption requested to outside through said interrupt level output line has been accepted; and
   a received channel inform line to recognize the completion of interrupt vector output from said output circuit,
   wherein said interrupt mask bit is connected to said received channel inform line and by being informed the completion of interrupt vector output through said inform line, then said interrupt mask bit is set to an interrupt disabled state so as to prohibit successive interruptions.

2. The interrupt control unit as claimed in Claim 1, wherein said interrupt mask circuit includes said interrupt mask bit, an AND circuit whose input terminals are connected to both of said interrupt mask bit output and said interrupt request signal line, and an interrupt detecting latch whose input terminals are connected to both of said AND circuit output and said received channel inform line.

3. The interrupt control unit as claimed in Claim 1, wherein said interrupt request signal line is comprised of a plurality of channels and wherein said interrupt mask bit is provided to each of said channels.

4. An interrupt control unit, comprising:
   at least one interrupt request signal line to input interrupt requests from outside;
   an interrupt mask circuit having at least one interrupt mask bit to decide whether the interruption is enabled or disabled state, an AND circuit whose input terminals are connected to both of said interrupt mask bit output and said interrupt request signal line, and an interrupt detecting latch whose input terminal is connected to said AND circuit output;
   a level converting circuit having writable registers from outside and generating predetermined interrupt levels corresponding to the output from said interrupt mask circuit only when said interrupt mask circuit is in an interrupt enabled state;
   a priority decision circuit to decide the priority of said interrupt levels informed from said level converting circuit and to encode the interrupt level having the highest priority;

an interrupt level output line to output the result from said priority decision circuit to outside;

an interrupt vector output circuit to output predetermined interrupt vectors to the outside when said interruption requested to outside through said interrupt level output line is accepted; and

a received channel inform line to recognize the completion of interrupt vector output from said output circuit,

wherein said received channel inform line is connected to both of said interrupt mask bit and interrupt detecting latch in order to inform said interrupt mask bit of the completion of interrupt vector output and to set said interrupt mask bit in an interrupt disabled state.

5. The interrupt control unit as claimed in Claim 4, wherein said interrupt request signal line is comprised of a plurality of channels and wherein said interrupt mask bit, AND circuit, and interrupt detecting latch are provided to each of said channels.

6. An interrupt control unit, comprising:

at least one interrupt request signal line to input interrupt requests from outside;

an interrupt mask circuit having at least one interrupt mask bit to decide whether the interruption is enabled or disabled, an automatic mask setting bit connected to said interrupt mask bit in order to set said interrupt mask bit to an interrupt enabled state or to interrupt disabled state by receiving instructions from outside, an AND circuit whose input terminals are connected to both of said interrupt mask bit output and said interrupt request signal line, and an interrupt detecting latch whose input terminal is connected to said AND circuit output;

a level converting circuit having writable registers from outside and generating predetermined interrupt levels corresponding to the output from said interrupt mask circuit only when said interrupt mask circuit is in an interrupt enabled state;

a priority decision circuit to decide the priority of said interrupt levels informed from said level converting circuit and to encode the interrupt level having the highest priority;

an interrupt level output line to output the result from said priority decision circuit to outside;

an interrupt vector output circuit to output predetermined interrupt vectors to outside when said interruption requested to outside through said interrupt level output line is accepted; and

a received channel inform line to recognize the completion of interrupt vector output from said output circuit,

wherein said received channel inform line is connected to both of said interrupt mask bit and interrupt detecting latch in order to inform said interrupt mask bit of the completion of interrupt vector output and to set said interrupt mask bit to an interrupt disabled state.

7. The interrupt control unit as claimed in Claim 6, wherein said interrupt request signal line is comprised of a plurality of channels and wherein said interrupt mask bit, automatic mask setting bit, AND circuit, and interrupt detecting latch are provided to each of said channels.

8. The interrupt control unit as claimed in Claim 6, wherein said automatic mask setting bit is a flip-flop which is writable from outside.

9. The interrupt control unit as claimed in Claim 6, wherein said automatic mask setting bit controls the output of said interrupt mask bit by receiving instructions from outside so as to set said interrupt mask bit automatically in an interrupt enabled state or interrupt disabled state for successive interruptions after the completion of interrupt vector output is informed through said received channel inform line.

F I G . 1

**PROCESSOR** 40

**PRIORITY DECISION CIRCUIT** 23

**LEVEL CONVERTING CIRCUIT** 22

**INTERRUPT MASK CIRCUIT** 21

**INTERRUPT VECTOR OUTPUT CIRCUIT** 24

20 29 31 33 30 32 28 28

# FIG.2

# FIG.3

(a) INTERRUPT REQUEST SIGNAL LINE (28)

(b) INTERRUPT MASK BIT (4)

(c) INTERRUPT DETECTING LATCH (5)

(d) RECEIVED CHANNEL INFORM LINE (32)

(e) OPERATION OF PROCESSOR (40)

VECTOR FETCH | PREPARA-TIONS | VECTOR FETCH | PREPARA-TIONS

EP 0 469 549 A2

# FIG.4

# FIG.5

# FIG.6

(a) INTERRUPT REQUEST SIGNAL LINE (28)

(b) INTERRUPT MASK BIT (4)

(c) INTERRUPT DETECTING LATCH (5)

(d) RECEIVED CHANNEL INFORM LINE (32)

(e) OPERATION OF PROCESSOR (40)

| | VECTOR FETCH | PREPARA-TIONS | INTERRUPT HANDLING |

EP 0 469 549 A2

# F I G.7